# EUROPEAN PATENT APPLICATION

(11) **EP 4 362 552 A2**
(43) Date of publication of application: **01.05.2024**
(21) Application number: 23200549.6
(22) Date of filing: 28.09.2023
(51) Int. Cl.: H04W 36/16, H04W 52/02

(54) **CARBON-INTELLIGENT COMMUNICATION NETWORK**

(30) Priority: 07.10.2022 US 202263378700 P; 21.09.2023 US 202318472184
(71) Applicant: MediaTek Inc., 30078 Hsinchu City (TW)
(72) Inventor: YANG, Chien-Sheng, Hsinchu City (TW); FU, I-Kang, Hsinchu City (TW); LIN, Yuan-Chieh, Hsinchu City (TW); LAI, Chia-Lin, Hsinchu City (TW); LIN, Yu-Hsin, Hsinchu City (TW); CHANG, Yun-Hsuan, Hsinchu City (TW)
(74) Representative: Hoefer & Partner Patentanwälte mbB

(57) **Abstract**

A method of reducing gray energy consumption and achieving optimal gray energy saving for carbon neutralization is proposed. In a cellular network, each cell or BS, group of cells, has renewable, green, and non-renewable, gray, on-grid power, energy sources. The renewable, green, energy is highly variable and unpredictable, while non-renewable, gray, on-grid power, is stable but is not renewable and thus has more carbon impact. Each cell or BS, group of cells, services is associated UEs when it is on. In one novel aspect, a cell or BS, group of cells, that consumes more non-renewable energy can give some or all of its served UEs to another cell or BS, group of cells, that consumes less non-renewable energy (602, 603).

## Description

### CROSS REFERENCE TO RELATED APPLICATIONS

This application claims priority under 35 U.S.C. §119 from U.S. Provisional Application Number 63/378,700, entitled "Carbon-Intelligent Communication Network", filed on October 7, 2022, the subject matter of which is incorporated herein by reference.

### TECHNICAL FIELD

The disclosed embodiments relate generally to wireless communication, and, more particularly, to a method of providing new network functions to maximize renewable energy utilization and to reduce carbon emissions in cellular communication networks.

### BACKGROUND

Climate change due to increasing carbon emissions by human activities has been identified as one of the most critical threats to Earth. Carbon neutralization, as a key approach to reverse climate change, has triggered the development of new regulations to enforce the economic activities toward low carbon solutions. Computing and Communication networks contribute huge amount of carbon emissions due to rising energy consumption. One approach to lower the carbon impact is to use renewable energy as much as possible. However, to adapt to highly variable and unpredictable nature of renewable energy utilized by computing/communication networks (i.e., carbon intensity of grid varies by time and location), a novel carbon-aware based signaling framework or scheduling policy that dynamically schedules/signals computation/communication resources arrangement is needed in order to allow many computing/network elements in a huge network (e.g., 3GPP 5G networks) to coordinate with each other to lower the overall carbon emissions.

Global warming caused by excessive emissions of carbon dioxide (e.g., burning fossil fuels for electricity generation) is the main driver to climate change, which has posed a significant threat to human society. To limit global warming, the most essential approach is via carbon neutralization, i.e., compensate carbon emissions by acquiring carbon offsets. Although the offsetting mechanisms for trading carbon credits (e.g., UN Carbon Offset Platform) have been widely adopted globally, it has been shown that such mechanisms have limitations to effectively reduce the carbon emissions. To achieve carbon neutrality, it is important to reduce the carbon emissions rather than offset them.

Power consumption in communication is huge, especially when the sustainable bit rate is exponentially increasing as the communication technology evolves generation by generation. Electricity generation is from energy sources (e.g., gas, coal, wind energy) with different levels of carbon emissions. In particular, due to the highly variable and unpredictable nature of renewable energy sources (e.g., solar energy), carbon intensity (i.e., average carbon emissions per unit of energy consumption) of electricity grid varies considerably by time and location.

Thus, to guarantee the reduction of carbon emissions in computing/communication networks, there is a critical need to design a signaling framework or scheduling policy for networks, which accounts for temporal and spatial dimensions of energy sources.

### SUMMARY

A method of reducing gray energy consumption and achieving optimal gray energy saving for carbon neutralization is proposed. In a cellular network, each cell or BS (group of cells) has renewable (green) and non-renewable (gray, on-grid power) energy sources. The renewable (green) energy is highly variable and unpredictable, while non-renewable (gray, on-grid power) is stable but is not renewable and thus has more carbon impact. Each cell or BS (group of cells) services is associated UEs when it is on. In one novel aspect, a cell or BS (group of cells) that consumes more non-renewable energy can give some or all of its served UEs to another cell or BS (group of cells) that consumes less non-renewable energy. Methods according to the invention are defined in the independent claims. The dependent claims define preferred embodiments thereof.

In one embodiment, a network function exchanges energy information of a plurality of cells in a mobile communication network, wherein the energy information comprises at least one of a current or a predicted green energy and gray energy status, a current green energy production state, and a current green consumption state.
The network function determines a triggering condition for increasing renewable energy and reducing carbon emission. The network function decides to handover a plurality of UEs served by a first base station to a second base station when the triggering condition is satisfied. The network function transmits a request message to the first base station for executing a handover operation.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G New Radio (NR) network supporting carbon-intelligent communication in accordance with aspects of the current invention.
Figure 2 illustrates simplified block diagrams of wireless devices, e.g., a UE and a gNB in accordance with embodiments of the current invention.
Figure 3 illustrates one embodiment of a carbon-intelligent communication network with signaling framework or scheduling policy that accounts for temporal and spatial dimensions of energy sources.
Figure 4 illustrates another embodiment of a carbon-intelligent communication network with signaling framework or scheduling policy that accounts for temporal and spatial dimensions of energy sources.
Figure 5 illustrates a sequence flow of achieving less grey energy consumption to meet carbon neutrality via handover operation in accordance with one novel aspect of the present invention.
Figure 6 is a flow chart of a method of reducing gray energy consumption to achieve carbon neutrality in accordance with one novel aspect.
Figure 7 is a flow chart of a method of monitoring and reporting energy information by a network entity in accordance with one novel aspect.

### DETAILED DESCRIPTION

Reference will now be made in detail to some embodiments of the invention, examples of which are illustrated in the accompanying drawings.

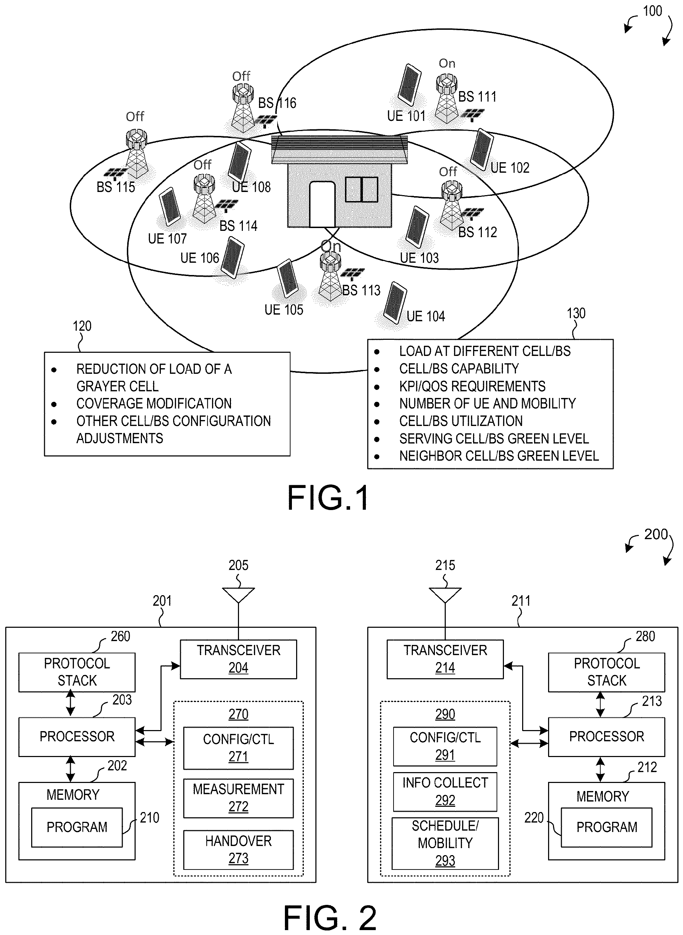

Figure 1 illustrates an exemplary 5G New Radio (NR) network supporting carbon-intelligent communication in accordance with aspects of the current invention. The 5G NR network 100 comprises User Equipments (UEs) including UE 101 to UE 108 and a plurality of base stations (BS or gNB) including BS 111 to BS 116. UE is communicatively connected to a serving gNB, which provides radio access using a Radio Access Technology (RAT) (e.g., the 5G NR technology). The UE may be a smart phone, a wearable device, an Internet of Things (IoT) device, and a tablet, etc. Alternatively, the UE may be a Notebook (NB) or Personal Computer (PC) inserted or installed with a data card which includes a modem and one or more radio frequency (RF) transceiver(s) to provide the functionality of wireless communication.

To guarantee the reduction of carbon emissions in computing/communication networks, there is a critical need to design a signaling framework or scheduling policy for networks, which accounts for temporal and spatial dimensions of energy sources. Two key approaches to meet carbon neutrality: 1) to increase the usage of renewable energy; and 2) to improve the network energy efficiency on RAN and core network. In a cellular network, each cell or BS (group of cells) has renewable (green) and non-renewable (gray, on-grid power) energy sources. The renewable (green) energy is highly variable and unpredictable, while non-renewable (gray, on-grid power) is stable but is not renewable and thus has more carbon impact. Each cell or BS (group of cells) services is associated UEs when it is on. A cell or BS (group of cells) that consumes more non-renewable energy can give some or all of its served UEs to another cell or BS (group of cells) that consumes less non-renewable energy.

In accordance with one novel aspect, a method of reducing gray energy consumption and achieving optimal gray energy saving for carbon neutralization is proposed. As depicted by 120, less gray energy consumption can be achieved by means such as: reduction of load of a grayer cell/BS; coverage modification (e.g., shrink the RF power of a grayer cell/BS), and other cell/BS configuration adjustments. As depicted by 130, the optimal gray energy saving decision depends on many factors including load situation at different cell/BS, cell/BS nodes capabilities, KPI/QoS requirements, number of active UEs and UE mobility, cell/BS utilization, serving cell/BS's green level (e.g., percentage of renewable energy consumed, or all energy consumed), and neighbor cell/BS's green level (e.g., percentage of renewable energy consumed, or all energy consumed).

Frist, green/gray energy status, statistics, or information can be exchanged among base stations and network entities via new signaling procedure or enhanced existing procedure. Second, based on the information, gray energy saving decisions can be made. Third, based on the decision, feedback can be exchanged via new signaling procedure or enhanced existing procedure. In the example of Figure 1, BS 111 is turned on to serve UE 101 and UE 102, BS 113 is turned on to service UE 103, UE 104, UE 105, UE 106, UE 107, and UE 108. On the other hand, BS 112, BS 114, BS 115, and BS 116 are all turned off for power saving and less gray energy consumption.

In another novel aspect, energy information monitoring and reporting are provided. Energy information measurement-monitoring/reporting comprises of measurements of energy information parameters and reports of the measurement result for a Network Entity (e.g., RAN, gNB, UPF, SMF) and can be enabled based on 3rd party application requests and/or operator policies configured in the Network Entity controlling Policy (e.g., PCF).

The energy information parameter(s) that can be measured by means of energy information measurement-monitoring/reporting include but not limited to a current or a predicted green energy and gray energy status, a current or predicted ratio of renewable energy, a current green energy production state, and a current green consumption state, a current energy efficiency state, and a current energy usage quota state.

A Network Entity (e.g., Green/Carbon-aware/Energy-efficient AF) may request measurements for one or more of the energy information parameters, which may trigger energy information monitoring/reporting in a Network Entity (e.g., RAN, gNB, UPF) optionally for service data flow(s) or network slice or PLMN and optionally for a time period.

A Network Entity (controlling Policy (e.g., PCF)) may generate the authorized energy information measurement-monitoring/reporting policy optionally for a service data flow based or network slice or PLMN and optionally for a time period on the energy information measurement-monitoring/reporting request received from other Network Entity (e.g., Green/Carbon-aware/Energy-efficient AF).

A Network Entity (controlling Policy (e.g., PCF)) includes the authorized energy information measurement-monitoring/reporting policy in the PCC or energy information measurement-monitoring/reporting rule and provides it to other Network Entity (e.g., RAN, gNB, UPF, SMF).

The energy information measurement-monitoring/reporting policy in PCC or energy information measurement-monitoring/reporting rule received from a first Network Entity may include the following. A second Network Entity (e.g., RAN, gNB, UPF, AMF, SMF) configures a third Network Entity (e.g., UPF, RAN, gNB) to perform energy information measurement-monitoring/reporting and to report the measurement-monitoring results by the second Network Entity (e.g., SMF) based on the authorized energy information measurement-monitoring/reporting policy received from the first Network Entity (controlling Policy (e.g., PCF)) and/or local configuration. The second Network Entity (e.g., AMF, SMF) may also configure a fourth network entity (e.g., RAN) to measure the energy information parameters based on the authorized energy information measurement-monitoring/reporting policy received from the first Network Entity (controlling Policy (e.g., PCF)) and/or local configuration.

New network functions (or an existing network entity with enhancement) are defined to select network entity based on the collected, exchanged, and monitored carbon intensity of energy sources available by the cloud/core/RAN located in different regions. As a result, a cell or BS (group of cells) or a 5G or a 6G core network function that consumes more renewable energy (e.g., higher ratio of renewable energy) can be selected or re-selected by another network function or by itself that consumes more non-renewable energy (e.g., lower ratio of renewable energy) (thus produce more carbon footprint). The new network functions (or an existing network entity with enhancement) can be implemented as a control function of a new network entity or an existing network entity such as 5G network function like MME, AMF, UPF, server, or the base station, or a 6G network function. The energy related information and statistics can be exchanged via a new signaling or an existing signaling procedure such as RRC signaling or NAS signaling or Core network internal signaling/API. For example, a base station can select a greener AMF/Core-NW-Function to serve it, or change from one not-that-green AMF/Core-NW-Function to another greener AMF/Core-NW-Function. For example, a SMF can select a greener UPF/Router to serve the data transmission for a subscriber/UE, or change from one not-that-green UPF/Router to another greener UPF/Router. For example, a base station can request to change to another base station when it determines itself as a not green base station.

Figure 2 illustrates simplified block diagrams of wireless devices, e.g., a UE 201 and a gNB 211 in accordance with embodiments of the current invention in 5G NR network 200. The gNB 211 has an antenna 215, which transmits and receives radio signals. An RF transceiver module 214, coupled with the antenna 215, receives RF signals from the antenna 215, converts them to baseband signals and sends them to the processor 213. The RF transceiver 214 also converts received baseband signals from the processor 213, converts them to RF signals, and sends out to the antenna 215. The processor 213 processes the received baseband signals and invokes different functional modules to perform features in the gNB 211. The memory 212 stores program instructions and data 220 to control the operations of the gNB 211.

In the example of Figure 2, the gNB 211 also includes a protocol stack 280 and a set of control function modules and circuits 290. The protocol stack 280 may include a Non-Access-Stratum (NAS) layer to communicate with an AMF/SMF/MME entity connecting to the core network, a Radio Resource Control (RRC) layer for high layer configuration and control, a Packet Data Convergence Protocol/Radio Link Control (PDCP/RLC) layer, a Media Access Control (MAC) layer, and a Physical (PHY) layer. In one example, the control function modules and circuits 290 include a configuration circuit for configuring the UE, an information collection circuit for collecting energy related status, statistics and data information, and a scheduling/mobility handling circuit for making scheduling and handover decisions based on the collected energy related information.

Similarly, the UE 201 has a memory 202, a processor 203, and an RF transceiver module 204. The RF transceiver 204 is coupled with the antenna 405, receives RF signals from the antenna 205, converts them to baseband signals, and sends them to the processor 203. The RF transceiver 204 also converts received baseband signals from the processor 203, converts them to RF signals, and sends out to the antenna 205. The processor 203 processes the received baseband signals and invokes different functional modules and circuits to perform features in the UE 201. The memory 202 stores data and program instructions 210 to be executed by the processor 203 to control the operations of the UE 201. Suitable processors include, by way of example, a special purpose processor, a Digital Signal Processor (DSP), a plurality of micro-processors, one or more micro-processor associated with a DSP core, a controller, a microcontroller, Application Specific Integrated Circuits (ASICs), File Programmable Gate Array (FPGA) circuits, and other type of Integrated Circuits (ICs), and/or state machines. A processor associated with software may be used to implement and configure features of the UE 201.

The UE 201 also includes a protocol stack 260 and a set of control function modules and circuits 270. The protocol stack 260 may include a NAS layer to communicate with an AMF/SMF/MME entity connecting to the core network, an RRC layer for high layer configuration and control, a PDCP/RLC layer, a MAC layer, and a PHY layer. The Control function modules and circuits 270 may be implemented and configured by software, firmware, hardware, and/or combination thereof. The control function modules and circuits 270, when executed by the processor 203 via program instructions contained in the memory 202, interwork with each other to allow the UE 201 to perform embodiments and functional tasks and features in the network. In one example, the control function modules and circuits 270 include a configuration and control circuit 271 for obtaining configuration information and controlling corresponding operation, a measurement circuit 272 for performing measurement, and a handover handling circuit 273 for performing handover based on the configuration received from the network.

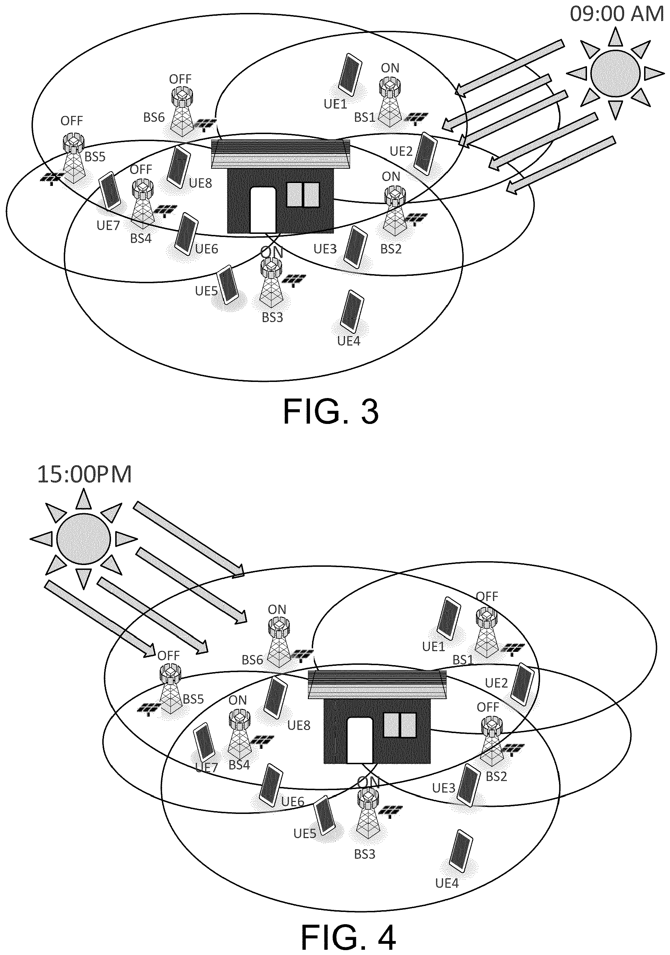

Figure 3 illustrates one embodiment of a carbon-intelligent communication network with signaling framework or scheduling policy that accounts for temporal and spatial dimensions of energy sources. New network functionality is defined to redistribute UEs to maximize renewable energy utilization, considering temporal and spatial dimensions of energy sources. New network functions are defined to collect, exchange, and monitor carbon intensity of energy sources available by the cloud/core/RAN located in different regions. As a result, a cell or BS (group of cells) that consumes more non-renewable energy can give some or all of its served UEs to another cell or BS (group of cells) that consumes less non-renewable energy. The new network functions can be implemented as a control function of a new network entity or an existing network entity such as MME, AMF, AMF, UPF, server, or the base station. The energy related information and statistics can be exchanged via a new signaling or an existing signaling procedure such as RRC signaling.

In the example of Figure 3, a plurality of base stations BS1 to BS6 provides various cell coverages for a plurality of user equipments including UE1 to UE8. At a first time of 9am in the morning, the solar panel of BS1, BS2 and BS3 facing the east are more efficient in utilizing renewable (green) energy sources, while other base stations BS4-BS6 consume more non-renewable (gray) energy sources.
As a result, BS1-BS3 are turned on to serve the plurality of UEs (UE1-UE8), while BS4-BS6 are turned off to save power and to reduce carbon consumption.

Figure 4 illustrates another embodiment of a carbon-intelligent communication network with signaling framework or scheduling policy that accounts for temporal and spatial dimensions of energy sources. Similar to Figure 4, a cell or BS (group of cells) that consumes more non-renewable energy can give some or all of its served UEs to another cell or BS (group of cells) that consumes less non-renewable energy. In the example of Figure 4, a plurality of base stations BS1 to BS6 provides various cell coverages for a plurality of user equipments UE1 to UE8. At a second time of 15pm in the afternoon, the solar panel of BS3, BS4, BS5, and BS6 facing the west are more efficient in utilizing renewable (green) energy sources, while other base stations BS1 and BS2 consume more non-renewable (gray) energy sources. As a result, BS3, BS4, and BS6 are turned on to serve the plurality of UEs (UE1-UE8), while BS1, BS2, and BS5 are turned off to save power and to reduce carbon consumption. Note that such decision is coordinated among the BSs and based on the dynamically collected green/gray energy status, statistics, and information. In addition, an updated decision can be dynamically made based on feedback information exchanged after the original decision is executed.

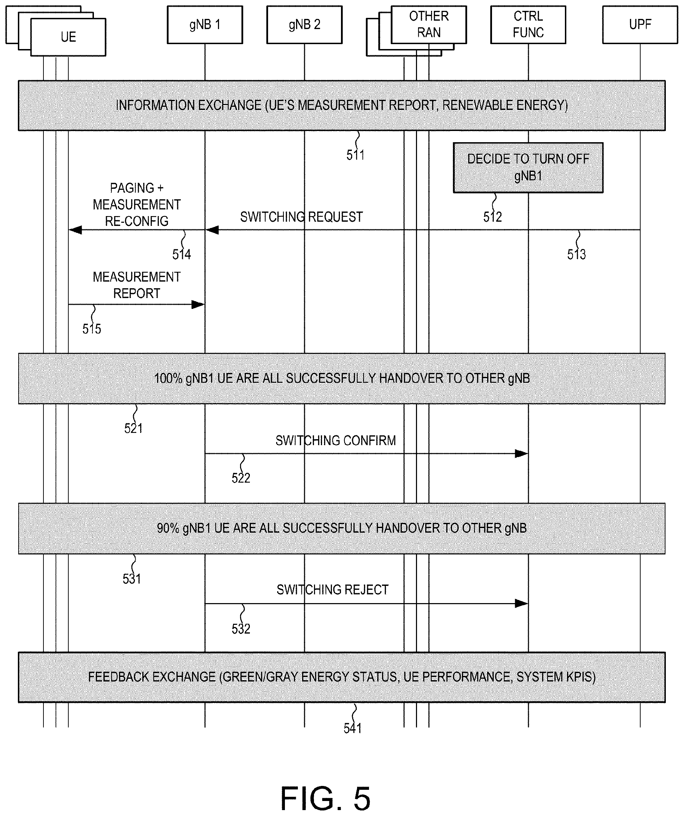

Figure 5 illustrates a sequence flow of achieving less grey energy consumption to meet carbon neutrality via handover operation in accordance with one novel aspect of the present invention. In step 511, green/gray energy status/statistics/information can be exchanged via a new signaling procedure or enhanced existing procedure. For example, the information exchange can occur between a first cell/BS and a second cell/BS, between a first cell/BS and a first Core network element (e.g., OAM), between a first cell/BS and a first UE, and/or between a first UE and a first Application Sever or application function. The exchanged status/statistics/information can be the current or predicted Green(renewable)/Gray energy percentage status, the current Green(renewable) energy production state (e.g., active, high, low, none), and/or the current Green(renewable) energy consumption state (e.g., active, high, low, none).

In step 512, a control function of a network entity (e.g., a new network entity or an existing network entity such as MME, AMF, AMF, UPF, server, or BS) decides to turn off a first cell/gNB1 based on the above information. The various decisions can be based on gray energy saving decision, such as recommended cell activation or deactivation; handover decision, including recommended candidate cells for taking over the traffic; predicted green (renewable) energy production state; predicted green (renewable) consumption state; validity time of corresponding decision. In one embodiment, when the expected traffic volume of gNB1 is lower than a threshold, then gNB1 can be turned off. In another example, if neighbor cell BS uses higher percentage of green energy than gNB1, then gNB1 can be turned off. In an alternative embodiment, instead of completely turning off the gNB1, decisions can be made to handover UEs served by gNB1 to other base stations.

Note that the switch off decision can be determined, commanded, instructed, or signaled by the first cell/BS itself, neighbor cells/BSs of the first cell/BS, core network/OAM of the first cell/BS, or application server of application function. The determined and/or commanded, instructed, signaled decision can be carried by a message sent by neighbor cells/BSs of the first cell/BS, core network/OAM of the first cell/BS, application server or application function to the first cell/BS (or to the UEs directly). In the example of Figure 5, in step 513, the UPF sends a switch off request message to gNB1. The commanded, instructed, or signaled message can contain a specific switch off cause value, e.g., switch-off/shut-down due to carbon consideration.

In step 514, the served UEs of the first cell/gNB1 are offloaded to a new cell/BS. In one example, for an IDLE/INACTIVE mode UE served by gNB1, a new broadcasted switched off indication can be used to indicate the served UE(s) to re-select to another neighbor cell (because the current serving cell is about to be switched off). The first cell/gNB1 can adjust its cell reselection priority configuration in broadcasted message to trigger the served UE(s) to trigger reselection quicker. The first cell/gNB1 can page the UE and make UE switch from IDLE/INACTIVE to CONNECTED mode, then continue with the below handling applicable to CONNECTED mode UE(s).

In another example, for a CONNECTED mode UE served by gNB1, the first cell/gNB1 can configure a new measurement configuration to let the UE measure neighbor cell(s)/BS(es), where the neighbor cell(s)/BS(es) using more green energy than the first cell. The first cell/gNB1 can send a request message to neighbor cell(s)/BS(es), where the neighbor cell(s)/BS(es) using more green energy than the first cell, and the request message contains the reason for the request, e.g., a cause value indicating request to handover/take-over the served UE(s) due to switch-off/power-down. The first cell/gNB1 can send a request message to UE, where the request message indicates to UE to change to a neighbor cell/BS, and the request message contains the reason for the request, e.g., a cause value indicating request to leave the current serving cell/BS due to switch-off/power-down. The UE can send a request message to another cell/BS to change from first cell/gNB1 to the other cell/BS, wherein the request message contains the reason for the request, e.g., a cause value indicating request to leave the current serving cell/BS due to switch-off/power-down. In step 515, the UE sends a measurement report back to gNB1.

The switch-off decision due to carbon consideration can be accepted or rejected by the first cell/gNB1 or by the UEs. In a first example, in step 521, all the UEs served by gNB1 are successfully handover to other cells/gNBs. In step 522, gNB1 sends a response back to the control function. The response message is an accept response message that contains the statistics and status of the UEs originally served by gNB1, e.g., 2 UEs handover to cell 2, 5 UEs handover to cell 3, and 1 UE is handover to cell 4, etc. As a result, gNB1 can be turned off. In a second example, in step 531, not all the UEs served by gNB1 are successfully handover to other cells/gNBs. In step 532, gNB1 sends a response back to the control function. The response message is a rejection response message that contains a specific reject cause value, e.g., the switch-off is rejected due to emergency call service ongoing, or e.g., the switch-off is rejected due to too many UEs failed to handover to other cell/BS. As a result, gNB1 will continue to serve the existing UEs.

In one embodiment, a timer is started by the request message sender, e.g., by gNB1 in step 514. Later on, the timer is stopped when an accept response message is received or when a rejection response message is received. If the rejection response message is received, then the sender determines whether to re-send the request message based on the reject cause value contained in the rejection response message. Alternatively, when the timer expires, the sender can increment a counter (unless the counter reaches a maximum value), and resend the request message (unless the counter reaches a maximum value). The sender can also abort the switch-off procedure or request another cell/BS to switch off.

Finally, in step 541, feedback can be exchanged based on the above decision via a new signaling procedure or enhanced existing procedure. For example, the feedback information comprises Green/Gray energy status of neighboring cell/BS nodes, UE performance affected by the decision (e.g., handover or reselected UEs), including QoE, throughput, packet loss, latency, etc., and system KPIs (e.g., QoE, latency, throughput, paging loss rate, RLF of current and neighboring cell/BS). Based on the feedback information, an updated decision can be made to further improve gray energy saving.

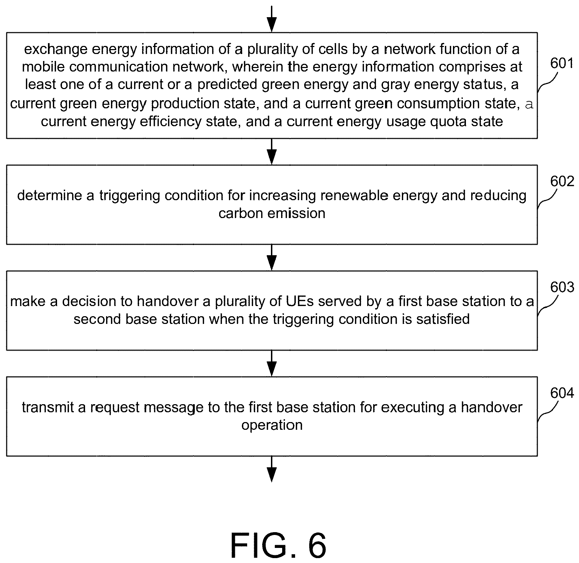

Figure 6 is a flow chart of a method of reducing gray energy consumption to achieve carbon neutrality in accordance with one novel aspect. In step 601, a network function exchanges energy information of a plurality of cells in a mobile communication network, wherein the energy information comprises at least one of a current or a predicted green energy and gray energy status, a current green energy production state, and a current green consumption state. In step 602, the network function determines a triggering condition for increasing renewable energy and reducing carbon emission. In step 603, the network function makes a decision to handover a plurality of UEs served by a first base station to a second base station when the triggering condition is satisfied. In step 604, the network function transmits a request message to the first base station for executing a handover operation.

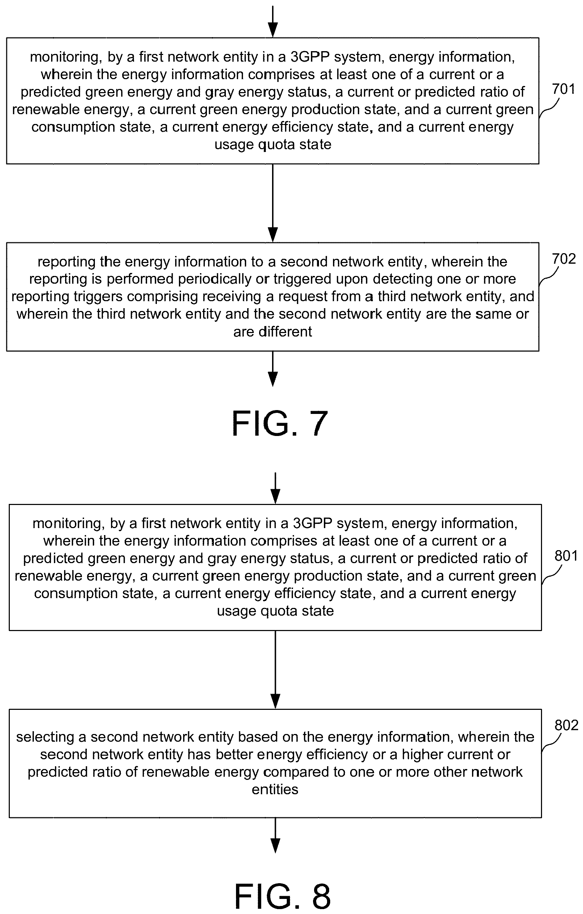

Figure 7 is a flow chart of a method of monitoring and reporting energy information by a network entity in accordance with one novel aspect. In step 701, a first network entity in a 3GPP system monitors energy information, wherein the energy information comprises at least one of a current or a predicted green energy and gray energy status, a current or predicted ratio of renewable energy, a current green energy production state, and a current green consumption state, a current energy efficiency state, and a current energy usage quota state. In step 702, the first network entity in a 3GPP system reports the energy information to a second network entity, wherein the reporting is performed periodically or triggered upon detecting one or more reporting triggers comprising detecting the change of energy information, receiving a request from a third network entity, and wherein the third network entity and the second network entity are the same or are different.

Figure 8 is a flow chart of a method of selecting a network entity based on energy information in accordance with one novel aspect. At step 801, a first network entity in a 3GPP system monitors energy information, wherein the energy information comprises at least one of a current or a predicted green energy and gray energy status, a current or predicted ratio of renewable energy, a current green energy production state, and a current green consumption state, a current energy efficiency state, and a current energy usage quota state. At step 802, the first network entity selects a second network entity based on the energy information, wherein the second network entity has better energy efficiency or a higher current or predicted ratio of renewable energy compared to one or more other network entities.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
monitoring, by a first network entity in a 3GPP system, energy information, wherein the energy information comprises at least one of a current or a predicted green energy and gray energy status, a current or predicted ratio of renewable energy, a current green energy production state, and a current green consumption state, a current energy efficiency state, and a current energy usage quota state (801);
selecting a second network entity based on the energy information, wherein the second network entity has better energy efficiency or a higher current or predicted ratio of renewable energy compared to one or more other network entities (802).

2. The method of claim 1, further comprising:
selecting a third network entity, upon determining the third network entity has a higher current or predicted ratio of renewable energy than the second network entity.

3. A method, comprising:
monitoring, by a first network entity in a 3GPP system,
energy information, wherein the energy information comprises at least one of a current or a predicted green energy and gray energy status, a current or predicted ratio of renewable energy, a current green energy production state, and a current green consumption state, a current energy efficiency state, and a current energy usage quota state (701); and
reporting the energy information to a second network entity, wherein the reporting is performed periodically or triggered upon detecting one or more reporting triggers comprising detecting the change of energy information, receiving a request from a third network entity, and wherein the third network entity and the second network entity are the same or are different (702).

4. The method of Claim 3, wherein a granularity of the energy information for reporting and monitoring is per service data flow, per network slice, or per PLMN.

5. The method of claim 3 or 4, wherein the monitoring is performed periodically or triggered by one or more triggering events comprising receiving a request from another network entity.

6. A method, comprising:
exchanging energy information of one or more cells by a network function in a mobile communication network, wherein
the energy information comprises at least one of a current or a predicted green energy and gray energy status, a current green energy production state, and a current green consumption state, a current energy efficiency state, and a current energy usage quota state (601);
determining a triggering condition for increasing renewable energy or reducing carbon emission (602);
making a decision to handover one or more UEs served by a first base station to a second base station when the triggering condition is satisfied (603); and
transmitting a request message to the first base station for executing a handover operation (604).

7. The method of Claim 6, wherein the triggering condition is satisfied when the second base station uses a higher percentage of green energy than the first base station.

8. The method of Claim 6 or 7, wherein the triggering condition is satisfied when a traffic volume of the first base station is lower than a threshold.

9. The method of any one of Claims 6 to 8, wherein the decision further involves switching off the first base station.

10. The method of any one of Claims 6 to 9, wherein the request message comprises a specific cause value related to carbon consideration.

11. The method of any one of Claims 6 to 10, further comprising:
receiving a response accept message from the first message or from a UE served by the first base station.

12. The method of any one of Claims 6 to 10, further comprising:
receiving a response rejection message from the first message or from a UE served by the first base station.

13. The method of any one of Claims 6 to 12, further comprising;
receiving feedback information by the network function after the executing the decision, wherein the feedback information comprises at least one of a green energy and gray energy status, UE performance affected by the decision, and system performance of the network.
